# EUROPÄISCHE PATENTANMELDUNG

(11) **EP 3 597 471 A1**
(43) Veröffentlichungstag der Anmeldung: **22.01.2020**
(21) Anmeldenummer: 18184227.9
(22) Anmeldetag: 18.07.2018
(51) Int. Cl.: B60L 13/06, B60L 13/00, B60L 13/03, E01B 25/34, E01B 25/30

(54) **LANGSTATORLINEARMOTOR**

(71) Anmelder: B&R Industrial Automation GmbH, 5142 Eggelsberg (AT)
(72) Erfinder: HÖCK, Martin, 5121 Ostermiething (AT); DICKER, Alexander, 5132 Geretsberg (AT)
(74) Vertreter: Patentanwälte Pinter & Weiss OG

(57) **Zusammenfassung**

Langstatorlinearmotor (1) mit einer Transportstrecke (2), entlang der zumindest ein Transportfahrzeug (Tn) in Bewegungsrichtung (x) bewegbar angeordnet ist. Die Transportstrecke (2) weist zumindest eine Haltekonstruktion (3) mit Antriebsspulen (Sm) auf, an der ein Passivteil (13) des Transportfahrzeuges (Tn) angeordnet ist. Der Langstatorlinearmotor (1) weist eine entlang der Transportstrecke (2) verlaufende Führungsfläche (11) und eine einlang der Transportstrecke (2) verlaufende Führungsspur (12) auf. Der Passivteil (13) weist zumindest einen ersten Antriebsmagneten (4) auf, der unter Freilassung eines Luftspaltes (s) parallel zur Führungsfläche (11) angeordnet ist, und der Passivteil (13) weist zumindest ein erstes Profilorgan (9) auf, welches an der Führungsspur (12) angeordnet ist und durch eine in einer Querrichtung (y) wirkende Anpresskraft in der Führungsspur (12) bezüglich einer normal auf die Bewegungsrichtung (x) und die Querrichtung (y) verlaufenden Steigrichtung (z) positioniert wird. Zumindest ein erstes Lauforgan (8) stützt den Passivteil (13) zur Gewährleistung des Luftspalts (s) gegen die zwischen den Antriebsmagneten (4) und Antriebsspulen (Sm) wirkende Anziehungskraft an der Haltekonstruktion (3) ab. Das Transportfahrzeug (Tn) weist zumindest ein erstes Hilfsführungsorgan (14) auf, das in Zusammenwirken mit einer zumindest in Divergenz- und/oder Konvergenzbereichen der Transportstrecke (2) an der Haltekonstruktion (3) vorgesehenen Hilfsführung (15) eine Bewegung des Transportfahrzeuges (Tn) in positiver und/oder negativer Steigrichtung (z) zumindest einseitig begrenzt.

## Beschreibung

Die Erfindung betrifft einen Langstatorlinearmotor mit einer Transportstrecke, entlang der zumindest ein Transportfahrzeug in Bewegungsrichtung bewegbar angeordnet ist, wobei der Langstatorlinearmotor zumindest eine Haltekonstruktion mit Antriebsspulen aufweist, an der ein Passivteil des Transportfahrzeuges angeordnet ist, wobei der Langstatorlinearmotor eine entlang der Transportstrecke verlaufende Führungsfläche und eine entlang der Transportstrecke verlaufende Führungsspur aufweist, wobei der Passivteil zumindest einen ersten Antriebsmagneten aufweist, der unter Freilassung eines Luftspaltes parallel zur Führungsfläche angeordnet ist, wobei das Transportfahrzeug zumindest ein erstes Profilorgan aufweist, welches an der Führungsspur angeordnet ist und durch eine in einer Querrichtung wirkende Anpresskraft auf die Führungsspur bezüglich einer normal auf die Bewegungsrichtung und die Querrichtung verlaufenden Steigrichtung positioniert wird, und wobei zumindest ein Lauforgan den Passivteil zur Gewährleistung des Luftspalts gegen die zwischen den Antriebsmagneten und den Antriebsspulen wirkende Anziehungskraft an der Haltekonstruktion abstützt.

Langstatorlinearmotoren dieser Art sind im Stand der Technik beispielsweise aus der US 9,428,347 bekannt. Der Vorteil des in der Führungsspur angeordneten Profilorgans liegt insbesondere in der einfachen Anwendung, da Transportfahrzeuge einfach und auch ohne Werkzeug der Transportstrecke hinzugefügt und aus dieser wieder entnommen werden können. Nachteilig ist allerdings, dass die Transportfahrzeuge bei einer zu geringen Andruckkraft oder bei einer zu hohen Traglast "entgleisen" können, d.h. das Profilorgan gerät aus der Führungsspur, wobei dann das Transportfahrzeug von der Haltekonstruktion herunterfällt. Es ist daher nicht möglich, die Transportstrecke mit beidseitig angeordneten Antriebsspulen auszustatten, da mit solch einer Anordnung, die auch als Doppelkammanordnung bezeichnet wird, die erforderliche Andruckkraft nicht erreicht würde. Eine beidseitige Anordnung ist jedoch vor allem im Bereich von Weichen erforderlich, insbesondere wenn die Weichen ohne mechanisch bewegte Stellelementen betreibbar sein sollen.

Es ist eine Aufgabe der gegenständlichen Erfindung, einen Langstatorlinearmotor zu schaffen, dessen Transportwagen ohne Werkzeuge durch einfaches Anlegen des Transportwagens an die Haltekonstruktion der Transportstrecke hinzufügbar und durch gegen die Magnetkraft Abheben des Transportwagens von der Haltekonstruktion einfach entfernbar sind. Dennoch soll der Langstatorlinearmotor eine Doppelkammanordnung der Antriebsspulen und das Vorsehen von Weichen ermöglichen.

Diese und weitere Aufgaben werden erfindungsgemäß durch eine Transportstrecke der eingangs genannten Art erreicht, bei der das Transportfahrzeug zumindest ein erstes Hilfsführungsorgan aufweist, das in Zusammenwirken mit einer zumindest in Divergenz- und/oder Konvergenzbereichen der Transportstrecke an der Haltekonstruktion vorgesehenen Hilfsführung eine Bewegung des Transportfahrzeuges in positiver und/oder negativer Steigrichtung zumindest einseitig begrenzt. Dadurch kann der Transportwagen auch Bereiche der Transportstrecke durchfahren, bei denen die Andruckkraft des Profilorgans auf die Führungsspur an sich nicht ausreichen würde, um den Transportwagen sicher in der Spur zu halten.

Als "Führungsspur" wird im Zusammenhang mit der gegenständlichen Offenbarung ein entlang der Transportstrecke verlaufendes Formelement bezeichnet, welches ein negatives (d.h. vertieftes) Profil, ein positives (d.h. erhabenes) Profil oder eine Kombination von negativen und positiven Profilteilen aufweist. Als "Profilorgan" wird das am Passivteil angeordnete, zur Führungsspur passende und mit dieser zusammenwirkende Gegenstück bezeichnet, welches insbesondere als profiliertes Gleitelement oder als Profilrolle ausgebildet sein kann. Das Profilorgan und die Führungsspur sind dabei so ausgebildet, dass die in Querrichtung (d.h. entlang der y-Achse) wirkende Kraftkomponente der Anziehungskraft zwischen den Antriebsspulen und den Antriebsmagneten in eine in z-Richtung wirkende Kraft umgelenkt wird. Diese in z-Richtung wirkende Kraft kann eine in negative z-Richtung wirkende Kraftkomponente der Gewichtskraft des Transportwagens und der darauf transportierten Güter aufnehmen.

In vorteilhafter Weise kann das Hilfsführungsorgan von der Hilfsführung beabstandet sein, wenn das Profilorgan an bzw. in der Führungsspur zentriert ist. Dadurch erzeugt die Hilfsführung in Streckenbereichen, bei denen die Andruckkraft ausreichend hoch ist, keine störende Reibung.

In einer weiteren vorteilhaften Ausführungsform kann die Hilfsführung lediglich in Divergenz- und/oder Konvergenzbereichen der Transportstrecke vorgesehen sein. Solche Divergenz- und/oder Konvergenzbereiche sind insbesondere für Weichen erforderlich, die ohne mechanisch bewegte Teile stellbar sind. Die erfindungsgemäßen Merkmale werden dabei gezielt in den Streckenbereichen umgesetzt, wo sie erforderlich sind.

In vorteilhafter Weise kann das erste Lauforgan an der Führungsfläche angelagert sein. Die Kombination aus Profilorgan und Lauforgan erleichtert das Einsetzen des Transportfahrzeuges und sorgt für eine definierte Verteilung der Andruckkraft.

In vorteilhaften Ausführungsformen können am Transportfahrzeug ein dem ersten Lauforgan in Querrichtung gegenüberliegend angeordnetes zweites Lauforgan und/oder ein dem ersten Hilfsführungsorgan in Querrichtung gegenüberliegend angeordnetes zweites Hilfsführungsorgan und/oder ein dem ersten Profilorgan in Querrichtung gegenüberliegend angeordnetes zweites Profilorgan und/oder ein dem ersten Antriebsmagneten in Querrichtung gegenüberliegend angeordneter zweiter Antriebsmagnet angeordnet sein. Diese Merkmale erlauben die Herstellung beidseitig angeordneter Haltekonstruktionen, wobei die zweite Haltekonstruktion entweder passiv (d.h. ohne Antriebsspulen) oder aktiv (d.h. mit Antriebsspulen) ausgebildet sein kann. Der Ausdruck "in Querrichtung gegenüberliegend" bezieht sich auf eine Anordnung beidseitig der x-z-Ebene (wie sie untenstehend definiert ist), unabhängig davon, ob der Transportwagen symmetrisch oder asymmetrisch ausgebildet ist. Auch der symmetrisch ausgebildete Passivteil kann gemäß der Erfindung an einer einseitigen Haltekonstruktion angeordnet und mit dieser verwendet werden.

Als "Haltekonstruktion" wird im Zusammenhang mit der Gegenständlichen Offenbarung ganz allgemein die Einheit an unbewegten Teilen des Langstatorlinearmotors bezeichnet. Der Begriff umfasst somit aktive Elemente, insbesondere die Antriebsspulen (bzw. den Stator) und deren Befestigung, sowie alle Streckenführungselemente, an denen die Transportwagen entlanggleiten bzw. rollen.

In einer weiteren vorteilhaften Ausführungsform können das erste und/oder zweite Profilorgan, das erste und/oder zweite Lauforgan und/oder das erste und/oder zweite Hilfsführungsorgan unabhängig voneinander als Rolle, als Gleitelement oder als Kombination aus Rolle und Gleitelement ausgebildet sein. Bei der Ausführung als Gleitelemente sind die jeweils entgegenwirkenden Anlagerungsbereiche als Gleitführungen ausgebildet. Entsprechende Gleitlager können beispielsweise als Trocken- oder Luftlager ausgebildet sein.

In vorteilhafter Weise kann zumindest ein Profilorgan als kombiniertes Gleit-/Rollorgan ausgebildet sein, dessen Rotationsachse mittig im Passivteil angeordnet ist, wobei das Profilorgan in Querrichtung an beiden Seiten aus dem Passivteil herausragt. Dies erlaubt eine sehr schlanke Konstruktion des Passivteils. Weiters wird die Tatsache ausgenutzt, dass die Anpresskraft im Einzelkammbereich sehr hoch ist, wobei das Profilorgan als reines Rollorgan wird, und in den Doppelkammbereichen sehr niedrig ist, wobei das Profilorgan dann als beidseitiges Gleitorgan wirken kann.

Gegebenenfalls kann zumindest ein Lauforgan als kombiniertes Gleit-/Rollorgan ausgebildet sein, dessen Rotationsachse mittig im Passivteil angeordnet ist, wobei das Lauforgan in Querrichtung an beiden Seiten aus dem Passivteil herausragt.

Die obigen Merkmale können in beliebiger Weise mit den zuvor angeführten Merkmalen kombiniert werden, um vorteilhafte Langstromlinearmotoren bzw. Transportfahrzeuge zu gestalten. Das Gestalten solcher Kombinationen liegt im Können des Durchschnittsfachmanns.

Die Erfindung betrifft weiters ein Transportfahrzeug mit den obenstehend für das Transportfahrzeug angeführten Merkmalen.

Das Transportfahrzeug und der Langstatorlinearmotor sind miteinander in Beziehung stehende Erzeugnisse, die zusammenwirken und sich gegenseitig ergänzen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Ausführung einer Transportstrecke eines Langstatorlinearmotors,
Fig. 2 eine quer zur Bewegungsrichtung geschnittene Ansicht eines an einer Transportstrecke angeordneten Transportfahrzeuges,
Fig. 3 und 4 jeweils eine schematisierte Darstellung eines Profilorgans und eines Hilfsführungsorgans eines an einer Haltekonstruktion angeordneten Transportfahrzeuges in zwei unterschiedlichen Positionen und
Fig. 5 eine quer zur Bewegungsrichtung geschnittene Ansicht eines an einer Transportstrecke angeordneten Transportfahrzeuges gemäß einer weiteren Ausführungsform.

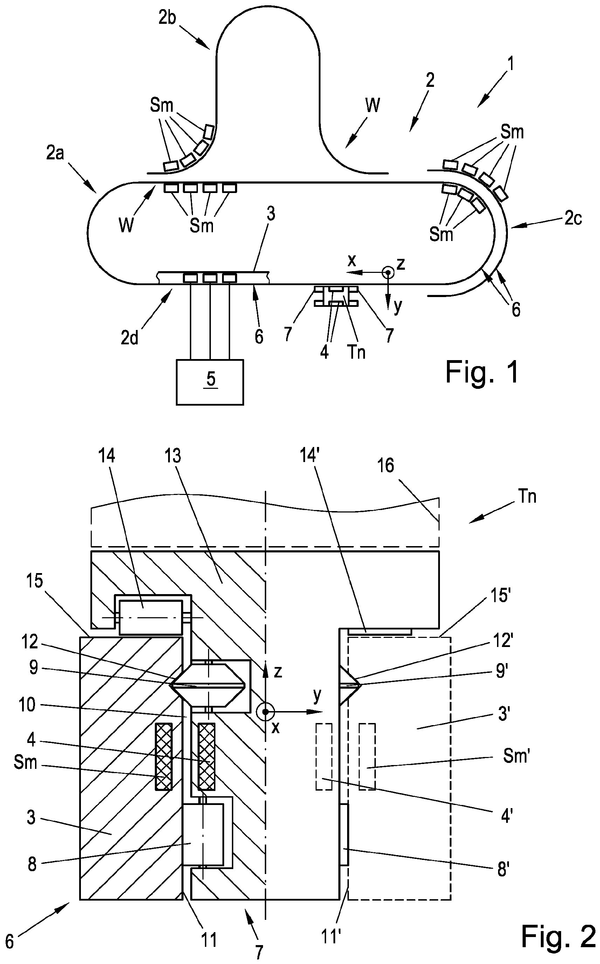

Die Fig.1 zeigt eine beispielhafte Förderanwendung mit einem Langstatorlinearmotor 1 mit einer Transportstrecke 2, entlang der eine Anzahl von Transportfahrzeugen Tn, mit n ≥ 1, bewegt werden können. Der Einfachheit halber ist in Fig.1 nur ein einziges Transportfahrzeug Tn dargestellt, wobei in einer solchen Anwendung in der Regel eine Vielzahl von Transportfahrzeugen Tn, häufig einige Hundert, gleichzeitig bewegt werden. Die Transportstrecke 2 wird gebildet durch in Bewegungsrichtung x nebeneinander angeordnete Antriebsspulen Sm (m steht für einen Index von 1 bis Anzahl der Antriebsspulen), die an einer ortsfesten Haltekonstruktion 3 (in Fig.1 nur angedeutet) angeordnet sind. Die Antriebsspulen Sm können von einer Anlagensteuereinheit 5 angesteuert werden (in Fig.1 nur für einige Antriebsspulen angedeutet), um diese zu bestromen um ein bewegtes Magnetfeld zu erzeugen. Am Transportfahrzeug Tn sind an beiden Seiten (in Querrichtung y gesehen) Antriebsmagnete 4 angeordnet, die in bekannter Weise mit dem von den Antriebsspulen Sm erzeugten Magnetfeld zur Bewegung des Transportfahrzeuges Tn zusammenwirken. Zur Bewegung eines Transportfahrzeuges Tn werden vorzugsweise nur die Antriebsspulen Sm im Bereich der Antriebsmagnete 4 eines Transportfahrzeuges Tn bestromt.

Das verwendete kartesische Koordinatensystem x, y, z ist ein mit dem Transportfahrzeug Tn mitbewegtes Koordinatensystem. Dabei zeigt x immer in die Bewegungsrichtung des Transportfahrzeuges Tn, die im Wesentlichen durch die Transportstrecke 2 vorgegeben wird. An einem gekrümmten Streckenabschnitt ist die Bewegungsrichtung natürlich die Tangente an die Krümmung. Die Bewegungsrichtung x kann damit grundsätzlich je nach Ausführung der Transportstrecke 2 beliebig im Raum orientiert sein. y bezeichnet die Querrichtung quer zur Bewegungsrichtung x und in Richtung zum Luftspalt 10 zwischen dem Antriebsmagneten 4 am Transportfahrzeug Tn und den Antriebsspulen Sm an der Transportstrecke 2. z ist normal auf die die x und y Achse des Transportfahrzeuges Tn und wird im Zusammenhang mit der gegenständlichen Offenbarung als Steigrichtung z bezeichnet, wobei diese Bezeichnung nicht einschränkend auszulegen ist. In der Regel, aber nicht notwendigerweise, wird die Ebene des Luftspalts 10 parallel zur x-z-Ebene sein und die y-Richtung normal auf die Ebene des Luftspalts.

Die Orientierung der Achsen des Koordinatensystems ist aber natürlich nicht auf die Ausführung der Figuren beschränkt, sondern ist im Prinzip beliebig. Beispielsweise könnte ein Langstatorlinearmotor 1 realisiert sein, bei dem die Antriebsspulen Sm und Antriebsmagnete 4 nicht seitlich, sondern oben und/oder unten angeordnet sind. Damit würden beispielsweise die y und z Achsen den Platz tauschen. Gegebenenfalls können die Antriebsspulen Sm und die Antriebsmagnete 4 auch in einer schräg zur x-z-Achse verlaufenden Ebene angeordnet sein, wobei sich bei einer Doppelkammanordnung beispielsweise eine V-Förmige Konfiguration ergeben kann.

An der Transportstrecke 2 ist auch zumindest eine Weiche W vorgesehen, die einen ersten Streckenabschnitt 2a und einen, davon abzweigenden zweiten Streckenabschnitt 2b der Transportstrecke 2 miteinander verbindet. Durch Stellen der Weiche W wird festgelegt, ob das Transportfahrzeug Tn entlang des ersten Streckenabschnittes 2a weiterbewegt oder, im Wesentlichen in Querrichtung y, auf den zweiten Streckenabschnitt 2b gelenkt und entlang des zweiten Streckenabschnittes 2b weiterbewegt wird. In der anderen Bewegungsrichtung werden zwei Streckenabschnitte natürlich auf einen Streckenabschnitt zusammengeführt. Eine Weiche W kann daher in der Regel in beide Bewegungsrichtungen durchfahren werden.

Die Transportstrecke 2 kann dabei, je nach Anwendung und Bedarf, beliebig geformt sein und kann geschlossene und/oder offene Streckenabschnitte umfassen. Die Transportstrecke 2 muss auch nicht in einer Ebene liegen, z.B. die x-y Ebene der Fig.1, sondern kann auch beliebig im Raum geführt sein.

Um auch Streckenabschnitte mit beidseitig angeordneten Haltekonstruktionen 3 nutzen zu können, ist in Querrichtung y an beiden Seiten des Transportfahrzeuges Tn (in Bewegungsrichtung x gesehen) ein Fahrzeug-Führungselement 7 angeordnet. Vorteilhafterweise ist das Transportfahrzeug Tn hierzu um die x-z-Ebene symmetrisch aufgebaut, wie beispielsweise in Fig.2 dargestellt.

An der Transportstrecke 2 ist ein Strecken-Führungselement 6 vorgesehen, das mit einem Fahrzeug-Führungselement 7 am Transportfahrzeug Tn zusammenwirkt, um das Transportfahrzeug Tn entlang der Transportstrecke 2 in Bewegungsrichtung x zu führen. Das Strecken-Führungselement 6 kann an der Haltekonstruktion 3 angeordnet sein oder Teil der Haltekonstruktion 3 sein, kann aber auch anderweitig an der Transportstrecke 2 angeordnet sein. Zur Führung können verschiedene Elemente, wie Rollen, Räder, Gleitelemente, Führungsflächen, Gleitflächen, usw., vorgesehen sein. Die Antriebsspulen Sm werden vorzugsweise im Bereich des Strecken-Führungselement 6, beispielsweise ebenfalls an der Haltekonstruktion 3 angeordnet, um eine kompakte Ausführung zu erreichen.

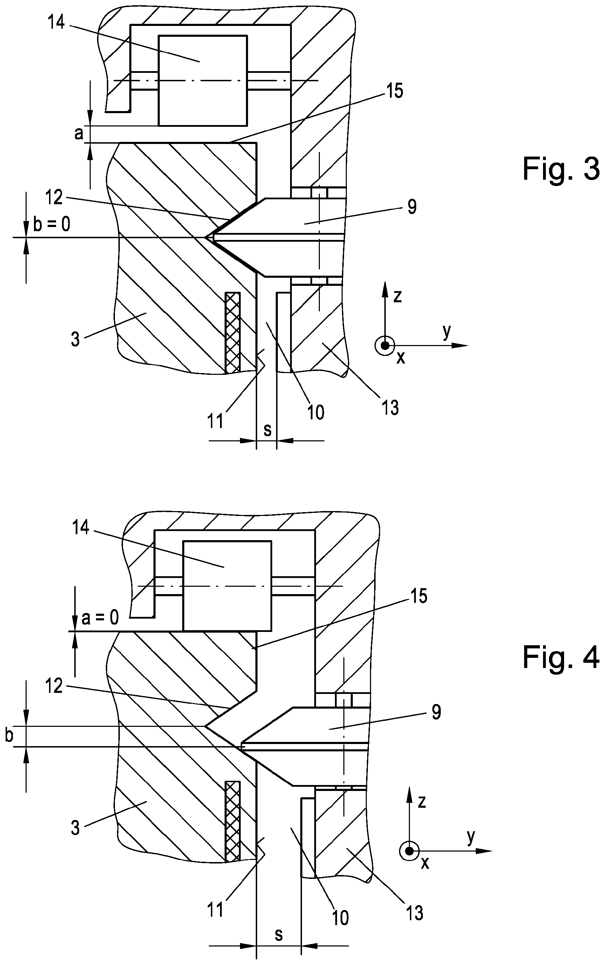

Die Transportstrecke 2 kann dabei einseitig oder zweiseitig (wieder in Querrichtung y gesehen) ausgeführt sein, wie anhand von Fig. 2 erläutert wird. Fig.2 und 3 zeigen jeweils einen Querschnitt quer zur Bewegungsrichtung x (in der y-z-Ebene), durch die Transportstrecke 2 und einem Transportfahrzeug Tn.

In Fig. 2 ist ein Transportfahrzeug Tn in einer Schnittansicht in der y-z-Ebene, d.h. quer zur Bewegungsrichtung x dargestellt, das an einer Haltekonstruktion 3 angeordnet ist. Fig. 2 zeigt Teile eine spezifische Ausführung der Strecken-Führungselemente 6 und Fahrzeug-Führungselemente 7. Die Strecken-Führungselement 6 umfassen dabei die Haltekonstruktion 3 und darin angeordnete Antriebsspulen Sm, die Fahrzeug-Führungselemente 7 umfassen im Wesentlichen einen Passivteil 13 des Transportfahrzeuges Tn mit den daran angeordneten Antriebsmagneten 4 und den entsprechenden Führungsrollen und/oder Gleitelementen.

Das Transportfahrzeug Tn besteht im Allgemeinen aus dem Passivteil 13, der mit der Haltekonstruktion 3 zusammenwirkt, und einem Aufbau 16, der im Allgemeinen für die zu transportierenden Güter ausgelegt ist. Der Passivteil 13 des Transportfahrzeuges Tn stützt sich mit (zumindest) einem in der Darstellung der Fig. 2 als Rad bzw. Rolle ausgebildeten Lauforgan 8 und (zumindest) einem in der Darstellung der Fig. 2 als Profilrolle ausgebildeten Profilorgan 9 an einer Führungsfläche 11 der Haltekonstruktion 3 ab, wobei das Profilorgan 9 in eine Führungsspur 12 eingreift, deren Funktion untenstehend genauer beschrieben wird. In alternativen Ausführungsformen kann das Lauforgan 8 an einer von der Führungsfläche 11 getrennt angeordneten, beispielsweise an einer eigens vorgesehenen Lauforganführung, angelagert sein und daran abrollen bzw. entlanggleiten. Auch die Führungsspur 12 kann getrennt von der Führungsfläche ausgeführt sein. Alternativ kann die Führungsspur 12 auch als erhabenes bzw. positives Profil ausgebildet sein, wobei das Profilorgan 9 in dem Fall ein passendes negatives Profil aufweist. Das Transportfahrzeug Tn ist an einem der Führungsfläche 11 gegenüberliegenden Bereich mit Antriebsmagneten 4 versehen, wobei an der Führungsfläche 11 die Antriebsspulen Sm angeordnet sind. Als Passivteil 13 wird somit im Zusammenhang mit der gegenständlichen Offenbarung der Bereich des Transportfahrzeugs Tn bezeichnet, in dem die Lauforgane 8, Profilorgane 9 und Antriebsmagneten 4 vorgesehen sind, und auf den die Antriebsspulen Sm (die demgemäß auch als Aktivteil bezeichnet werden können) wirken. Zwischen der Führungsfläche 11 und der Oberfläche des Transportfahrzeugs bildet sich der Luftspalt 10 aus, an dessen Seiten die Antriebsmagneten 4 bzw. Antriebsspulen Sm angeordnet sind.

Das Transportfahrzeug Tn kann an offenen Streckenabschnitten (d.h. an Streckenabschnitten mit nur einseitig angeordneter Haltekonstruktion 3) zu der Transportstrecke hinzugefügt oder aus dieser entnommen werden. Zum Hinzufügen wird das Transportfahrzeug Tn mit dem Profilorgan 9 in die Führungsspur 12 eingesetzt wobei das Lauforgan 8 mit der Führungsfläche 11 in Anlagerung gelangt. Die Magnetkraft zwischen Antriebsspule Sm und Antriebsmagnet 4 bewirkt dabei eine erhebliche Andruckkraft, durch die das Transportfahrzeug Tn mit dem Lauforgan 8 fest gegen die Führungsfläche 11 und mit dem Profilorgan 9 fest in die Führungsspur 12 gedrückt wird. Dadurch wird das Profilorgan 9 durch die Anpresskraft in der Führungsspur 12 zentriert und das Transportfahrzeug Tn in eine hinsichtlich der z-Achse definierten Position geführt. Gleichzeitig wird durch die Anpresskraft eine normal zur Richtung der Anpresskraft, d.h. parallel zur z-Achse gerichtete Kraftkomponente erzeugt, die stark genug ist, um das Gewicht des Transportfahrzeuges Tn und der damit transportierten Güter aufzunehmen.

In der in Fig. 2 dargestellten Ausführungsform weist das Profilorgan 9 ein keilförmiges Profil auf, wobei die Führungsspur 12 als Nut mit einem entsprechenden V-förmigen Profil ausgebildet ist. Das Profilorgan 9 liegt mit seiner (in der Darstellung der Fig. 2) unteren Profilseite auf der unteren Führungsfläche der Führungsspur 12 auf. Aufgrund der schrägen Anlagerung und der damit schräg zur Anpresskraft verlaufenden Normalkraft resultiert eine in z-Richtung gerichtete Kraftkomponente, die das Transportfahrzeug Tn (wieder in der Darstellung der Fig. 2) nach oben drückt, bis das Profilorgan in der Mitte der Führungsspur 12 zentriert angeordnet ist. Die resultierende Kraftkomponente ist somit abhängig von der Anpresskraft und der Schräge des Profils. Sie muss stark genug sein, um das Eigengewicht des Transportfahrzeugs Tn und das Gewicht der vom Transportfahrzeug Tn transportierten Güter aufzunehmen. In die andere Richtung (also nach oben hin) ist die Vertikalbewegung des Profilorgans 9, und somit des Transportwagens Tn, durch die (in Fig. 2) obere Führungsfläche der Führungsspur 12 begrenzt.

Neben dem dargestellten V-Profil kann jedoch auch eine beliebige andere Profilkombination von Profilorganprofil und Führungsspurprofil verwendet werden, sofern sie aufgrund der Anpresskraft eine zentrierende bzw. positionierende Wirkung und die entsprechende resultierende Kraftkomponente erzeugt. Da die zwischen Antriebsmagnet 4 und Antriebsspule Sm wirkende Anziehungskraft im Allgemeinen sehr stark ist, können auf diese Weise verhältnismäßig große Lasten transportiert werden, ohne dass zusätzliche Führungen in z-Richtung erforderlich wären.

Die Führung funktioniert auch in einer beliebigen Schräglage, also wenn die Schwerkraft nicht in Richtung der negativen z-Achse wirkt. Praktisch kann die Streckenführung entweder in einer horizontalen Ebene angeordnet sein, sie kann aber auch Steigungen (aufsteigend und/oder absteigend) oder gar Vertikalabschnitte aufweisen, und/oder sie kann zumindest abschnittsweise schräg geneigt, oder gar "kopfüber" geführt sein ("kopfüber" bedeutet in dem Zusammenhang, dass die Schwerkraft in Richtung der positiven z-Achse wirkt).

Streckenabschnitte, bei denen die Haltekonstruktion 3 nur an einer Seite der Strecke (bzw. des Passivteils 13 des Transportfahrzeugs Tn) angeordnet ist, werden im Zusammenhang mit der gegenständlichen Offenbarung als "Einzelkammbereiche" bezeichnet.

Oft ist es jedoch auch wünschenswert oder erforderlich, auch auf der gegenüberliegenden Seite des Passivteils 13 eine weitere Haltekonstruktion 3' anzuordnen, wie dies in Fig. 2 in Strichlinien angedeutet ist. Dazu ist das zwischen den Haltekonstruktionen 3, 3' angeordnete Transportfahrzeug Tn im Wesentlichen symmetrisch ausgebildet, wobei beidseitig je ein Satz an entsprechenden Lauforganen 8, 8' und Profilorganen 9, 9' angeordnet ist. Gegebenenfalls kann das Transportfahrzeug Tn hinsichtlich des Passivteils 13 und/oder des Aufbaus 16 auch asymmetrisch ausgebildet sein.

Streckenabschnitte, in denen die Haltekonstruktion 3, 3' beidseitig vorgesehen ist (wie zum Beispiel der in Fig. 1 dargestellte Streckenabschnitt 2c oder die Bereiche der Weichen), werden im Zusammenhang mit der gegenständlichen Offenbarung als "Doppelkammbereiche" bezeichnet.

Da sich in Doppelkammbereichen auf beiden Seiten des Passivteils 13 gegenüberliegende Antriebsspulen Sm, Sm' befinden, die in entgegengesetzten Richtungen auf die Antriebsmagnete 4, 4' des Transportfahrzeuges Tn wirken, ist die resultierende Querkraft (d.h. die in Querrichtung y wirkende Kraft) im Wesentlichen gleich Null, sodass keine der Profilorgane 9, 9' in bzw. auf die entsprechende Führungsspur 12, 12' gedrückt wird. Dennoch kann das Transportfahrzeug Tn aufgrund der beidseitigen Führung in den gegenüberliegenden Führungsspuren 12, 12' nicht aus der Haltekonstruktion 3 herausfallen.

Ein Problem mit der Doppelkammanordnung kann sich jedoch in Divergenz- oder Konvergenzbereichen ergeben, also dort wo etwa bei Weichen die beiden Seiten der Haltekonstruktion 3, 3' auseinanderlaufen oder zusammengeführt werden. Dort wirkt die Anziehungskraft zwischen den beidseitig angeordneten Antriebsspulen Sm und den entsprechenden Antriebsmagneten 4 von beiden Seiten her auf den Passivteil 13, sodass die resultierende Anpresskraft, mit der die Lauforgane 8 bzw. Profilorgane 9 gegen die Führungsfläche 11 (bzw. in die Führungsspur 12) gedrückt werden, fehlt. Da die beiden Haltekonstruktionen 3, 3' jedoch bereits zu weit voneinander entfernt sind, funktioniert auch die "einklemmende" Halterung nicht mehr. Dies kann dazu führen, dass ein Transportfahrzeug Tn in einem Divergenz- oder Konvergenzbereich aus der Führung fällt, was dann eine Störung der Transportstrecke 2 bewirkt. Dieses Problem tritt insbesondere bei höheren Transportlasten verstärkt auf. Auch höhere Transportgeschwindigkeiten können das Problem aufgrund höherer Fliehkraftanteile in gekrümmten Streckenverläufen verstärken. Der Effekt ist unabhängig von einer Regelung, da er auch im unbestromten Fall auftritt und nur die Anziehungskraft zwischen den Antriebsmagneten 4 und dem Eisen des Stators betrifft.

Um das Auftreten solcher Störungen zu vermeiden weist das Transportfahrzeug Tn erfindungsgemäß zumindest ein zusätzliches Hilfsführungsorgan 14 auf, das eine Bewegung des Transportfahrzeuges Tn in Steigrichtung z begrenzt.

Das Hilfsführungsorgan 14 kann beispielsweise als Rollorgan, Gleitorgan oder kombiniertes Roll-Gleitorgan ausgebildet sein, das zumindest zeitweise an einer beispielsweise als Führungsfläche ausgebildeten Hilfsführung 15 der Haltekonstruktion 3 gleitet oder rollt und dabei eine Bewegung des Transportfahrzeugs Tn in (positiver und/oder negativer) Steigrichtung z begrenzt. Die Hilfsführung 15 kann entweder nur in Divergenz- oder Konvergenzbereichen der Transportstrecke 2 vorgesehen sein, oder sie kann entlang der gesamten Transportstrecke 2 an den Haltekonstruktionen 3, 3' vorgesehen sein. Das Transportfahrzeug Tn kann mit einem einzigen Hilfsführungsorgan 14 versehen sein, das beispielsweise nur an einer Seite der Transportstrecke 2 wirksam ist, oder es kann mehrere Hilfsführungsorgane 14 aufweisen, die gegebenenfalls beidseitig angeordnet sein können.

In Fig. 2 sind als Hilfsführungsorgane 14, 14' zwei Führungsrollen vorgesehen, die auf jeweils einer Seite des Transportwagens Tn angeordnet sind, wobei Rollflächen auf die an der Haltekonstruktion 3 angeordnete Hilfsfläche 15 ausgerichtet sind. Die Hilfsfläche 15 ist in x-y-Ebene ausgerichtet, d. h. parallel zur Bewegungsrichtung x und zur Querrichtung y. In der in Fig. 2 dargestellten sehr einfachen Annahme ist die Hilfsfläche 15 normal auf die Führungsfläche 11 ausgerichtet, dies ist jedoch keine notwendige Voraussetzung, die Hilfsfläche 15 könnte beispielsweise auch unter einem Winkel auf die Führungsfläche 11 ausgerichtet sein.

In der ordnungsgemäß geführten Position des Transportwagens Tn, also wenn das Profilorgan 9 (bzw. die Profilorgane 9, 9') passgenau in der Führungsspur 12 angeordnet ist, berührt das Hilfsführungsorgan 14 die Hilfsführung 15 vorzugsweise nicht, sondern es gelangt erst mit der Hilfsführung 15 in Kontakt, wenn das Profilorgan 9 bereits ein wenig "aus der Spur geraten" ist, wie dies in Verbindung mit Fig. 3 und 4 schematisch dargestellt ist. Die Darstellung der Fig. 3 und 4 entspricht dabei vom Konzept her im Wesentlichen der in Fig. 2 dargestellten Ausführungsform von Transportwagen Tn und Haltekonstruktion 3, wobei nur ein relevanter Ausschnitt davon gezeigt ist.

In Fig. 3 ist eine Position gezeigt, bei der das Profilorgan 9 im Wesentlichen in der Führungsspur 12 zentriert ist, d. h. der Versatz b ist null oder (wie dargestellt) vernachlässigbar klein, d.h. innerhalb der funktionell vorgegebenen Toleranzen. In dieser Position ist das Hilfsführungsorgan 14 von der Hilfsführung 15 beabstandet und "schwebt" berührungsfrei über der Oberfläche der Hilfsführung 15, wodurch Reibungseffekte vermieden werden.

Etwa im Bereich einer Divergenz oder Konvergenz der Haltekonstruktion 3, 3' kann sich beispielsweise aufgrund der Schwerkraft das Profilorgan 9 aus der zentrierten Lage bewegen, wie dies in Fig. 4 durch den relativ großen Versatz b dargestellt ist. In dem Fall gelangt das Hilfsführungsorgan 14 in Kontakt mit der Hilfsführung 15 und verhindert dadurch, dass das Profilorgan 9 weiter aus der Führungsspur 12 gleiten kann.

Die Darstellung der Fig. 3 und 4 ist der Erkennbarkeit halber verzerrt und nicht maßstabsgetreu dargestellt. Üblicherweise ist der maximale Abstand a sehr klein, beispielsweise im Bereich eines Millimeters oder darunter. Dadurch wird sichergestellt, dass die Breite s des Luftspalts 10 nicht zu groß werden kann. Aufgrund der schrägen Profilierung der Führungsspur 12 bzw. des Profilorgans 9 verändert sich nämlich mit dem Versatz b nicht nur der Abstand a zwischen Hilfsführungsorgan 14 und Hilfsführung 15, sondern auch die Breite s des Luftspalts 10 zwischen der Führungsfläche 11 und der Oberfläche des Passivteils 13, und somit auch zwischen der der Anstriebsspule Sm und dem Antriebsmagneten 4. Um die Wirkung der Magnetkräfte zu optimieren ist es vorteilhaft, die Breite s des Luftspalts 10 möglichst klein zu halten.

Gegebenenfalls kann eine weitere Hilfsführung mit entsprechenden Hilfsführungsorganen vorgesehen sein, um die Bewegung des Transportfahrzeuges Tn auch in der entgegengesetzten Steigrichtung (d.h. absteigend und aufsteigend) zu begrenzen. Dies ist insbesondere dann sinnvoll, wenn die Transportstrecke nicht nur in einer Ebene verläuft, sondern wenn die Strecke auch Verschwenkungen bzw. Verdrehungen und/oder Steigungen aufweist. Praktisch kann dies durch das Vorsehen eines weiteren Hilfsführungsorgans am Transportwagen Tn geschehen, das mit einer an der Haltekonstruktion 3 der Hilfsführung 15 in Steigrichtung z gegenüberliegend angeordneten zweiten Hilfsführung in Kontakt gelangt.

In einer weiteren alternativen Ausführungsform können Haltekonstruktion 3 und Hilfsführungsorgan 14 so ausgeführt sein, dass sie standardmäßig in Kontakt sind und das Profilorgan 9 somit im Wesentlichen zwangsgeführt in der Führungsspur 12 zentriert bzw. positioniert wird. In einer weiteren Ausführungsform kann die Hilfsführung 15 lediglich im Bereich der Weichen, bzw. der Divergenz- oder Konvergenzbereiche der Transportstrecke vorgesehen sein, beispielsweise indem die Haltekonstruktion 3 in diesen Bereichen erhabene Flächen- oder Schienenbereiche aufweist, mit denen das Hilfsführungsorgan 14 dort in Kontakt gelangt.

Für die Ausbildung des Passivteils 13 des Transportfahrzeuges Tn sind zahlreiche weitere vorteilhafte Umsetzungsvarianten denkbar. Beispielsweise können anstelle der zuvor beschriebenen Rollen und Rädern auch Gleitelemente für die Lauforgane 8 und/oder Profilorgane 9 verwendet werden. Dadurch lassen sich der mechanische Aufwand und auch das Gewicht des Passivteils 13 erheblich reduzieren.

In einer weiteren Variante kann je ein Profilorgan 9 und/oder ein Lauforgan 8 als kombiniertes Gleit-/Rollorgan ausgebildet sein, dessen Rotationsachse mittig (d.h. in der x-z-Ebene parallel zur z-Achse) im Passivteil 13 angeordnet ist, wobei die Profile bzw. Rollflächen beidseitig aus dem Passivteil 13 hervorragen. Dabei rollen das Profilorgan 9 und das Lauforgan 8 in Einzelkammbereichen, wo die Rollen von der Magnetkraft fest gegen die Führungsfläche 11 bzw. in die Führungsspur 12 gedrückt werden, daran ab, sodass die Organe dann als Rollen wirken. In Doppelkammbereichen, wo die Anpresskraft auf beiden Seiten minimal ist und dieselbe Rolle an jeder Seite in je einer Führungsspur 12, 12' angeordnet ist, wirkt sie hingegen beidseitig als Gleitelement. Eine solche Ausführungsform erlaubt eine sehr dünne Gestaltung des Passivteils 13, der beispielsweise in einer einfachen Plattenform ausgebildet sein kann. Durch die schlanke Form ist es auch einfach möglich, mehrere hintereinander angeordnete einzelne Transportfahrzeuge gelenkig miteinander zu verbinden, sodass sie eine "Zugskonfiguration" bilden, die dann als eine Transporteinheit gemeinsam bewegt wird.

Passend zu der Ausführungsform der Transportfahrzeuge Tn können die Haltekonstruktionen 3 jeweils ein oder auch mehrere Führungsspuren 12 aufweisen. Dabei können die Führungsspuren 12 symmetrisch oder asymmetrisch angeordnet sein, das heißt die Führungsspuren 12 können an den beiden Seiten gleichartig oder unterschiedliche ausgebildet sein. Asymmetrische Anordnungen bieten den Vorteil, dass die Ausrichtung des Transportfahrzeuges Tn eindeutig definiert ist, wohingegen symmetrische Anordnungen den Vorteil bieten, dass symmetrisch ausgebildete Transportfahrzeuge Tn beidseitig auf die Haltekonstruktion 3 angesetzt werden können, ohne dass die Bedienperson auf die Ausrichtung achten muss.

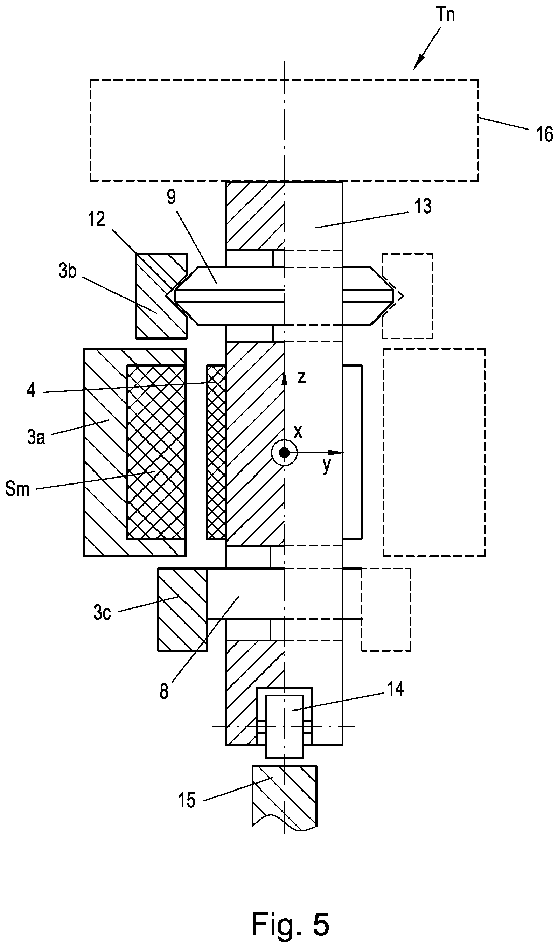

Fig. 5 zeigt ein an einem Langstatorlinearmotor 1 angeordnetes Transportfahrzeug Tn gemäß einer weiteren beispielhaften Ausführungsform.

Der Passivteil 13 des in Fig. 5 dargestellten Transportfahrzeuges Tn ist als verhältnismäßig schlanker Plattenkörper ausgebildet. Das Profilorgan 9 und das Lauforgan 8 sind als kombinierte Gleit-/Rollorgane ausgebildet, deren Rotationsachse mittig (d.h. in der x-z-Ebene parallel zur z-Achse) im Passivteil 13 angeordnet sind, wobei das Profil des Profilorgans 9 und die Rollfläche des Lauforgans 8 jeweils beidseitig aus dem Passivteil 13 hervorragen. Das Profilorgan 9 und das Lauforgan 8 sind dabei in Schlitzen bzw. Durchlässen angeordnet, die den Passivteil 13 in Querrichtung durchqueren. Seitlich an dem plattenförmig ausgebildeten Passivteil 13 sind Permanentmagnete als Antriebsmagnete 4 angeordnet.

Das Hilfsführungsorgan 14 ist wiederum als Rollköper mit einer zur Querachse parallelen Drehachse ausgebildet, wobei in dem Fall nur ein Hilfsführungsorgan 14 am (in Fig. 5) unteren Ende des Passivteils in einer entsprechenden Aufnahme angeordnet ist. In der "normalen" Position (d.h. wenn das Profilorgan 9 in der Führungsspur 12 zentriert ist), kann das Hilfsführungsorgan 14 wiederum von der Hilfsführung 15 beabstandet sein, oder es kann mit dieser Hilfsführung 15 im Wesentlichen ständig in Kontakt sein.

Im Unterschied zur Ausführungsform der Fig. 2 besteht die Haltekonstruktion 3 in diesem Fall aus mehreren getrennten Einheiten, die mit 3a, 3b und 3c bezeichnet sind. Die Führungsspur 12 ist in einer Führungsschiene 3b vorgesehen und das Lauforgan 8 rollt beziehungsweise gleitet entlang einer Führungsbahn 3c. Auch die Hilfsführung 15 ist als getrennte Einheit ausgebildet. Der mit 3a bezeichnete Teil der Haltekonstruktion beinhaltet lediglich die Antriebsspulen und steht ansonsten in keinem direkten mechanischen Kontakt mit dem Transportwagen. Diese Ausführung erleichtert die Wartung und den Austausch verschlissener oder defekter Teile.

Wiederum kann die Haltekonstruktion 3a, 3b, 3c einseitig oder beidseitig angeordnet sein.

### Bezugszeichen:

Transportfahrzeug Tn
Antriebsspule Sm
Weiche W
Bewegungsrichtung x
Querrichtung y
Steigrichtung z
Abstand a
Versatz b
Luftspalt s
Langstatorlinearmotor 1
Transportstrecke 2
Haltekonstruktion 3
Antriebsmagnete 4
Anlagensteuereinheit 5
Strecken-Führungselement 6
Fahrzeug-Führungselement 7
Lauforgan 8
Profilorgan 9
Luftspalt 10
Führungsfläche 11
Führungsspur 12
Passivteil 13
Hilfsführungsorgan 14
Hilfsführung 15
Aufbau 16

## Patentansprüche

1. Langstatorlinearmotor (1) mit einer Transportstrecke (2), entlang der zumindest ein Transportfahrzeug (Tn) in Bewegungsrichtung (x) bewegbar angeordnet ist, wobei der Langstatorlinearmotor (1) zumindest eine Haltekonstruktion (3) mit Antriebsspulen (Sm) aufweist, an der ein Passivteil (13) des Transportfahrzeuges (Tn) angeordnet ist, wobei der Langstromlinearmotor (1) eine entlang der Transportstrecke (2) verlaufende Führungsfläche (11) und eine entlang der Transportstrecke (2) verlaufende Führungsspur (12) aufweist, wobei der Passivteil (13) zumindest einen ersten Antriebsmagneten (4) aufweist, der unter Freilassung eines Luftspaltes (s) parallel zur Führungsfläche (11) angeordnet ist, wobei das Transportfahrzeug (Tn) zumindest ein erstes Profilorgan (9) aufweist, welches an der Führungsspur (12) angeordnet ist und durch eine in einer Querrichtung (y) wirkende Anpresskraft auf die Führungsspur (12) bezüglich einer normal auf die Bewegungsrichtung (x) und die Querrichtung (y) verlaufenden Steigrichtung (z) positioniert wird, und wobei zumindest ein erstes Lauforgan (8) den Passivteil (13) zur Gewährleistung des Luftspalts (s) gegen die zwischen den Antriebsmagneten (4) und Antriebsspulen (Sm) wirkende Anziehungskraft an der Haltekonstruktion (3) abstützt, **dadurch gekennzeichnet, dass** das Transportfahrzeug (Tn) zumindest ein erstes Hilfsführungsorgan (14) aufweist, das in Zusammenwirken mit einer zumindest in Divergenz- und/oder Konvergenzbereichen der Transportstrecke (2) an der Haltekonstruktion (3) vorgesehenen Hilfsführung (15) eine Bewegung des Transportfahrzeuges (Tn) in positiver und/oder negativer Steigrichtung (z) zumindest einseitig begrenzt.

2. Langstatorlinearmotor (1) nach Anspruch 1, **dadurch gekennzeichnet, dass** das Hilfsführungsorgan (14) von der Hilfsführung (15) beabstandet ist, wenn das Profilorgan (9) in der Führungsspur (12) zentriert ist.

3. Langstatorlinearmotor (1) nach Anspruch 1 oder 2, **dadurch gekennzeichnet, dass** die Hilfsführung (15) lediglich in Divergenz- und/oder Konvergenzbereichen der Transportstrecke (2) vorgesehen ist.

4. Langstatorlinearmotor (1) nach einem der Ansprüche 1 bis 3, **dadurch gekennzeichnet, dass** das erste Lauforgan (8) an der Führungsfläche (11) angelagert ist.

5. Langstatorlinearmotor (1) nach Anspruch 4, **dadurch gekennzeichnet, dass** am Transportfahrzeug (Tn) ein dem ersten Lauforgan (8) in Querrichtung (y) gegenüberliegend angeordnetes zweites Lauforgan (8') angeordnet ist.

6. Langstatorlinearmotor (1) nach einem der Ansprüche 1 bis 5, **dadurch gekennzeichnet, dass** am Transportfahrzeug (Tn) ein dem ersten Hilfsführungsorgan (14) in Querrichtung (y) gegenüberliegend angeordnetes zweites Hilfsführungsorgan (14') angeordnet ist.

7. Langstatorlinearmotor (1) nach einem der Ansprüche 1 bis 6, **dadurch gekennzeichnet, dass** am Transportfahrzeug (Tn) ein dem ersten Profilorgan (9) in Querrichtung (y) gegenüberliegend angeordnetes zweites Profilorgan (9') angeordnet ist.

8. Langstatorlinearmotor (1) nach einem der Ansprüche 1 bis 7, **dadurch gekennzeichnet, dass** am Transportfahrzeug (Tn) ein dem ersten Antriebsmagneten (4) in Querrichtung (y) gegenüberliegend angeordneter zweiter Antriebsmagnet (4') angeordnet ist.

9. Langstatorlinearmotor (1) nach einem der Ansprüche 1 bis 8, **dadurch gekennzeichnet, dass** das erste und/oder zweite Profilorgan (9, 9'), das erste und/oder zweite Lauforgan (8, 8') und/oder das erste und/oder zweite Hilfsführungsorgan (14, 14') als Rolle, als Gleitelement oder als Kombination aus Rolle und Gleitelement ausgebildet sind.

10. Langstatorlinearmotor (1) nach einem der Ansprüche 1 bis 9, **dadurch gekennzeichnet, dass** zumindest ein Profilorgan (9) als kombiniertes Gleit-/Rollorgan ausgebildet ist, dessen Rotationsachse mittig im Passivteil (13) angeordnet ist, wobei das Profilorgan (9) in Querrichtung (y) an beiden Seiten aus dem Passivteil (13) herausragt.

11. Langstatorlinearmotor (1) nach einem der Ansprüche 1 bis 10, **dadurch gekennzeichnet, dass** zumindest ein Lauforgan (8) als kombiniertes Gleit-/Rollorgan ausgebildet ist, dessen Rotationsachse mittig im Passivteil (13) angeordnet ist, wobei das Lauforgan (8) in Querrichtung (y) an beiden Seiten aus dem Passivteil (13) herausragt.

12. Transportfahrzeug (Tn) für einen Langstatorlinearmotor (1) gemäß einem der Ansprüche 1 bis 11, wobei das Transportfahrzeug (Tn) die in einem der Ansprüche 1 bis 11 beschriebenen Merkmale aufweist.
